(19)

Europäisches Patentamt
European Patent Office
Office européen des brevets

(11) **EP 4 614 496 A1**

(12) **EUROPEAN PATENT APPLICATION**
published in accordance with Art. 153(4) EPC

(43) Date of publication:
**10.09.2025   Bulletin 2025/37**

(21) Application number: **23884427.8**

(22) Date of filing: **31.08.2023**

(51) International Patent Classification (IPC):
**G10L 19/00** (2013.01)

(52) Cooperative Patent Classification (CPC):
**G10L 19/00; G10L 19/16**

(86) International application number:
**PCT/CN2023/116052**

(87) International publication number:
**WO 2024/093490 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022   CN 202211345610**

(71) Applicant: **DOUYIN VISION CO., LTD.
Beijing 100041 (CN)**

(72) Inventors:
• **WU, Ziqian
  Beijing 100028 (CN)**
• **ZHANG, Dejun
  Beijing 100028 (CN)**

• **JIANG, Jiawei
  Beijing 100028 (CN)**
• **WANG, He
  Beijing 100028 (CN)**
• **LIN, Kunpeng
  Beijing 100028 (CN)**
• **XIAO, Yijian
  Beijing 100028 (CN)**
• **DING, Piao
  Beijing 100028 (CN)**
• **SONG, Shenyi
  Beijing 100028 (CN)**

(74) Representative: **Marks & Clerk LLP
15 Fetter Lane
London EC4A 1BW (GB)**

(54) **METHOD AND APPARATUS FOR PROCESSING AUDIO CODING DATA PACKET**

(57)     A method and apparatus for processing an audio coding data packet. The method comprises: parsing an audio coding data packet to acquire data packet information of the audio coding data packet, wherein the data packet information comprises a timestamp and a description index value of the audio coding data packet, audio data corresponding to the audio coding data packet comprises at least one description, and the description index value is an index of the description; determining whether a data packet cache caches a data packet which has the same data packet information as the audio coding data packet; and if the data packet cache does not cache said data packet, writing the audio coding data packet into the data packet cache according to the data packet information of the audio coding data packet.

```
┌────────────────────────────────────────────┐
│ Parsing an audio coding data packet to obtain data packet │ ⌇ S101
│ information of the audio coding data packet │
└────────────────────────────────────────────┘
                      │
                      ▼
              ╱ Determining ╲
        ╱ whether a data packet whose data ╲
   ╱ packet information is identical to data packet information of the ╲ ⌇ S102
        ╲ audio coding data packet is buffered in a ╱
              ╲ data packet buffer ╱
                      │ No
                      ▼
┌────────────────────────────────────────────┐
│ Writing the audio coding data packet into the data packet │ ⌇ S103
│ buffer based on the data packet information of the audio │
│ coding data packet │
└────────────────────────────────────────────┘
```

Fig. 1

# Description

The present application claims the priority to Chinese Patent Application No. 202211345610.6, filed on October 31, 2022, the entire disclosure of which is incorporated herein by reference as portion of the present application.

## TECHNICAL FIELD

Embodiments of the present disclosure relate to a method and an apparatus for processing an audio coding data packet.

## BACKGROUND

As an important part for a real-time audio and video call, an audio jitter buffer in a real-time communication architecture mainly functions to buffer received audio media data packets and smoothly output data to a decoding part, and can handle jitters, losses, delays, etc., occurring during reception of audio data packets.

However, the audio jitter buffer may buffer only one audio coding data packet regarding one timestamp, and thus supports processing of only single description coding (SDC) bitstreams. For multiple description coding (MDC) bitstreams, there may be a plurality of audio coding data packets with the same timestamp, but the audio jitter buffer buffers only one of the audio coding data packets. As a result, audio data may be lost during audio processing, deteriorating the quality of decoded audio and affecting the user experience.

## SUMMARY

In view of this, embodiments of the present disclosure provide a method and an apparatus for processing an audio coding data packet, to avoid loss of MDC bitstream data.

An embodiment of the present disclosure provides a method for processing an audio coding data packet, which includes:

parsing an audio coding data packet to obtain data packet information of the audio coding data packet, where the data packet information includes a timestamp and a description index value of the audio coding data packet, the audio coding data packet is obtained by coding audio data, the audio coding data packet includes at least one description of the audio data, and the description index value is an index of the description;

determining whether a data packet whose data packet information is identical to data packet information of the audio coding data packet is buffered in a data packet buffer; and

in response to that no data packet whose data packet information is identical to data packet information of the audio coding data packet is buffered in the data packet buffer, writing the audio coding data packet into the data packet buffer based on the data packet information of the audio coding data packet.

In an optional implementation of the embodiments of the present disclosure, the method further includes:

determining a target timestamp, where the target timestamp is a timestamp of an audio coding data packet that needs to be decoded currently;

reading each audio coding data packet whose timestamp is the target timestamp from the data packet buffer; and

decoding each audio coding data packet whose timestamp is the target timestamp to obtain audio data corresponding to the target timestamp.

In an optional implementation of the embodiments of the present disclosure, in response to each description being transmitted in one audio coding data packet, the writing the audio coding data packet into the data packet buffer based on the data packet information of the audio coding data packet includes:

determining a buffer space corresponding to the timestamp of the audio coding data packet in the data packet buffer;

determining a buffering order of the audio coding data packet in the buffer space based on the description index value of the audio coding data packet; and

writing the audio coding data packet into the buffer space based on the buffering order of the audio coding data packet in the buffer space.

In an optional implementation of the embodiments of the present disclosure, the data packet information of the audio coding data packet further includes a sequence number of the audio coding data packet and a total number of descriptions of the audio data corresponding to the audio coding data packet, and the method further includes:

acquiring a first sequence number based on the sequence number of the audio coding data packet and the description index value of the audio coding data packet, where the first sequence number is a sequence number of the audio coding data packet for transmitting a first description whose timestamp is a first timestamp, and the first timestamp is a timestamp of the audio coding data packet; and

acquiring a delay of the audio coding data packet based on the first sequence number, a second sequence number, and the total number of descriptions, where the second sequence number is a sequence number of the audio coding data packet for transmitting a first description whose timestamp is a second timestamp, and the second timestamp is a timestamp of a previously received audio coding data packet.

In an optional implementation of the embodiments of the present disclosure, the method further includes:

acquiring a packing duration for the audio coding data packet based on the first sequence number, the second sequence number, the first timestamp, the second timestamp, the total number of descriptions, and a sampling rate of the audio data;
acquiring a delay of the audio coding data packet based on the first sequence number, the second sequence number, and the total number of descriptions; and
adjusting an audio playback parameter corresponding to the audio coding data packet based on the packing duration and the delay.

In an optional implementation of the embodiments of the present disclosure, in response to descriptions of audio data with the same timestamp being transmitted in the same audio coding data packet, the writing the audio coding data packet into the data packet buffer based on the data packet information of the audio coding data packet includes:

determining whether the audio coding data packet carries descriptions of audio data with a plurality of timestamps; and
in response to that the audio coding data packet does not carry the descriptions of the audio data with the plurality of timestamps, determining a buffer space corresponding to the timestamp of the audio coding data packet in the data packet buffer, and writing the audio coding data packet into the buffer space; or
in response to that the audio coding data packet carries the descriptions of the audio data with the plurality of timestamps, determining buffer spaces corresponding to the plurality of timestamps respectively in the data packet buffer, writing the audio coding data packet into the buffer spaces corresponding to the plurality of timestamps respectively, and modifying the timestamp of the audio coding data packet, which is written into a buffer space corresponding to any timestamp, into the any timestamp.

In an optional implementation of the embodiments of the present disclosure, the reading each audio coding data packet whose timestamp is the target timestamp from the data packet includes:
reading all audio coding data packets from buffer spaces each corresponding to the target timestamp.

In an optional implementation of the embodiments of the present disclosure, the method further includes:

cludes:
after determining the target timestamp, discarding an audio coding data packet in the data packet buffer whose timestamp is less than the target timestamp.

In an optional implementation of the embodiments of the present disclosure, the method further includes:

in response to determining that the data packet whose data packet information is identical to data packet information of the audio coding data packet is buffered in the data packet buffer, comparing a priority of the audio coding data packet with a priority of the data packet; and
in response to the priority of the audio coding data packet being higher than the priority of the data packet, replacing the data packet with the audio coding data packet; or
in response to the priority of the audio coding data packet being lower than the priority of the data packet, discarding the audio coding data packet.

Another embodiment of the present disclosure provides an apparatus for processing an audio coding data packet, which includes:

a processing unit configured to parse an audio coding data packet to obtain data packet information of the audio coding data packet, where the data packet information includes a timestamp and a description index value of the audio coding data packet, the audio coding data packet is obtained by coding audio data, the audio coding data packet includes at least one description of the audio data, and the description index value is an index of the description;
a determination unit configured to determine whether a data packet whose data packet information is identical to data packet information of the audio coding data packet is buffered in a data packet buffer; and
a writing unit configured to, in response to that no data packet whose data packet information is identical to data packet information of the audio coding data packet is buffered in the data packet buffer, write the audio coding data packet into the data packet buffer based on the data packet information of the audio coding data packet.

In an optional implementation of the embodiments of the present disclosure, the apparatus for processing an audio coding data packet further includes:

a determination unit configured to determine a target timestamp, where the target timestamp is a timestamp of an audio coding data packet that needs to be decoded currently;
a reading unit configured to read each audio coding data packet whose timestamp is the target timestamp from the data packet buffer; and
a decoding unit configured to decode each audio coding data packet whose timestamp is the target timestamp to obtain audio data corresponding to the target timestamp.

In an optional implementation of the embodiments of the present disclosure, the writing unit is specifically configured to: in response to each description being transmitted in one audio coding data packet, determine a buffer space corresponding to the timestamp of the audio coding data packet in the data packet buffer; determine a buffering order of the audio coding data packet in the buffer space based on the description index value of the audio coding data packet; and write the audio coding data packet into the buffer space based on the buffering order of the audio coding data packet in the buffer space.

In an optional implementation of the embodiments of the present disclosure, the processing unit is further configured to: acquire a first sequence number based on the sequence number of the audio coding data packet and the description index value of the audio coding data packet, where the first sequence number is a sequence number of an audio coding data packet for transmitting the first description whose timestamp is a first timestamp, and the first timestamp is a timestamp of the audio coding data packet; acquire a second sequence number, where the second sequence number is a sequence number of the audio coding data packet for transmitting the first description whose timestamp is a second timestamp, and the second timestamp is a timestamp of a previously received audio coding data packet; and acquire a delay of the audio coding data packet based on the first sequence number, a second sequence number, and the total number of descriptions, where the second sequence number is a sequence number of the audio coding data packet for transmitting the first description whose timestamp is a second timestamp, and the second timestamp is a timestamp of a previously received audio coding data packet.

In an optional implementation of the embodiments of the present disclosure, the processing unit is further configured to: acquire a packing duration for the audio coding data packet based on the first sequence number, the second sequence number, the first timestamp, the second timestamp, the total number of descriptions, and a sampling rate of the audio data; acquire a delay of the audio coding data packet based on the first sequence number, the second sequence number, and the total number of descriptions; and adjust an audio playback parameter corresponding to the audio coding data packet based on the packing duration and the delay.

In an optional implementation of the embodiments of the present disclosure, the writing unit is specifically configured to: in response to descriptions of audio data with the same timestamp being transmitted in the same audio coding data packet, determine whether the audio coding data packet carries descriptions of audio data with a plurality of timestamps; and in response to that the audio coding data packet does not carry the descriptions of the audio data with the plurality of timestamps, determine a buffer space corresponding to the timestamp of the audio coding data packet in the data packet buffer, and write the audio coding data packet into the buffer space; or in response to that the audio coding data packet carries the descriptions of the audio data with the plurality of timestamps, determine buffer spaces corresponding to the plurality of timestamps respectively in the data packet buffer, write the audio coding data packet into the buffer spaces corresponding to the plurality of timestamps respectively, and modify the timestamp of the audio coding data packet, which is written into a buffer space corresponding to any timestamp, into the any timestamp.

In an optional implementation of the embodiments of the present disclosure, the reading unit is specifically configured to read all audio coding data packets from buffer spaces each corresponding to the target timestamp.

In an optional implementation of the embodiments of the present disclosure, the processing unit is further configured to, after the target timestamp is determined, discard an audio coding data packet in the data packet buffer whose timestamp is less than the target timestamp.

In an optional implementation of the embodiments of the present disclosure, the writing unit is further configured to: in response to determining that the data packet whose data packet information is identical to data packet information of the audio coding data packet is buffered in the data packet buffer, compare a priority of the audio coding data packet with a priority of the data packet; and in response to the priority of the audio coding data packet being higher than the priority of the data packet, replace the data packet with the audio coding data packet; or in response to the priority of the audio coding data packet being lower than the priority of the data packet, discard the audio coding data packet.

Another embodiment of the present disclosure provides an electronic device, including a memory and a processor. The memory is configured to store a computer program. The processor is configured to, when executing the computer program, cause the electronic device to implement the method for processing an audio coding data packet according to any one of the above implementations.

Still another embodiment of the present disclosure provides a computer-readable storage medium. A computer program, when executed by a computing device, causes the computing device to implement the method for processing an audio coding data packet according to any one of the above implementations.

Still another embodiment of the present disclosure provides a computer program product that, when run on a computer, causes the computer to implement the method for processing an audio coding data packet according to any one of the above implementations.

In the method for processing an audio coding data packet according to the embodiments of the present disclosure, the audio coding data packet is first parsed to obtain data packet information of the audio coding data packet; then whether a data packet whose data packet information is identical to data packet information of the audio coding data packet is buffered in a data packet buffer is determined; and in response to that no data packet whose data packet information is identical to data packet information of the audio coding data packet is buffered in the data packet buffer, the audio coding data packet is written into the data packet buffer based on the data packet information of the audio coding data packet. In the embodiments of the present disclosure, the data packet information includes the timestamp and the description index value of the audio coding data packet, and in response to the timestamp or the description index value of the audio coding data packet being different from that of a buffered data packet, the audio coding data packet is written into the data packet buffer. Therefore, compared with a known technology in which an audio jitter buffer can buffer only one audio coding data packet for audio data with the same timestamp, the embodiments of the present disclosure may buffer all audio coding data packets with different description index values for the same timestamp, to avoid loss of MDC bitstream data.

## BRIEF DESCRIPTION OF DRAWINGS

The drawings herein are incorporated into and form a part of the specification, illustrate the embodiments consistent with the present disclosure, and are used in conjunction with the specification to explain the principles of the present disclosure.

In order to more clearly illustrate the embodiments of the present disclosure, the drawings to be used in the embodiments will be briefly described below, and it will be obvious to those ordinarily skilled in the art that other drawings can be obtained on the basis of these drawings without inventive work.

Fig. 1 is a first flowchart of steps of a method for processing an audio coding data packet according to an embodiment of the present disclosure;
Fig. 2 is a first schematic diagram of bitstreams of bitstream data according to an embodiment of the present disclosure;
Fig. 3 is a second flowchart of steps of a method for processing an audio coding data packet according to an embodiment of the present disclosure;
Fig. 4 is a third flowchart of steps of a method for processing an audio coding data packet according to an embodiment of the present disclosure;
Fig. 5 is a first schematic diagram of a buffer space for bitstream data according to an embodiment of the present disclosure;
Fig. 6 is a second schematic diagram of a buffer space for bitstream data according to an embodiment of the present disclosure;
Fig. 7 is a second schematic diagram of bitstreams of bitstream data according to an embodiment of the present disclosure;
Fig. 8 is a fourth flowchart of steps of a method for processing an audio coding data packet according to an embodiment of the present disclosure;
Fig. 9 is a third schematic diagram of bitstreams of bitstream data according to an embodiment of the present disclosure;
Fig. 10 is a third schematic diagram of a buffer space for bitstream data according to an embodiment of the present disclosure;
Fig. 11 is a first schematic diagram of a structure of an apparatus for processing an audio coding data packet according to an embodiment of the present disclosure;
Fig. 12 is a second schematic diagram of a structure of an apparatus for processing an audio coding data packet according to an embodiment of the present disclosure; and
Fig. 13 is a schematic diagram of a hardware structure of an electronic device according to an embodiment of the present disclosure.

## DETAILED DESCRIPTION

In order to understand the above objects, features and advantages of the present disclosure more clearly, the solutions of the present disclosure will be further described below. It should be noted that, in case of no conflict, the features in one embodiment or in different embodiments can be combined.

Many specific details are set forth in the following description to fully understand the present disclosure, but the present disclosure can also be implemented in other ways different from those described here; obviously, the embodiments in the specification are a part but not all of the embodiments of the present disclosure.

In the embodiments of the present disclosure, terms such as "exemplary" or "for example" are used for representing an example, an illustration, or a description. Any embodiment or design solution described by "exemplary" or "for example" in the embodiments of the present disclosure should not be construed as being more preferred or more advantageous than other embodiments or design solutions. To be precise, the term "exemplary" or "for example" is intended to present a related concept in a specific manner. Furthermore, in the description of the embodiments of the present disclosure, "a plurality of" means two or more, unless otherwise specified.

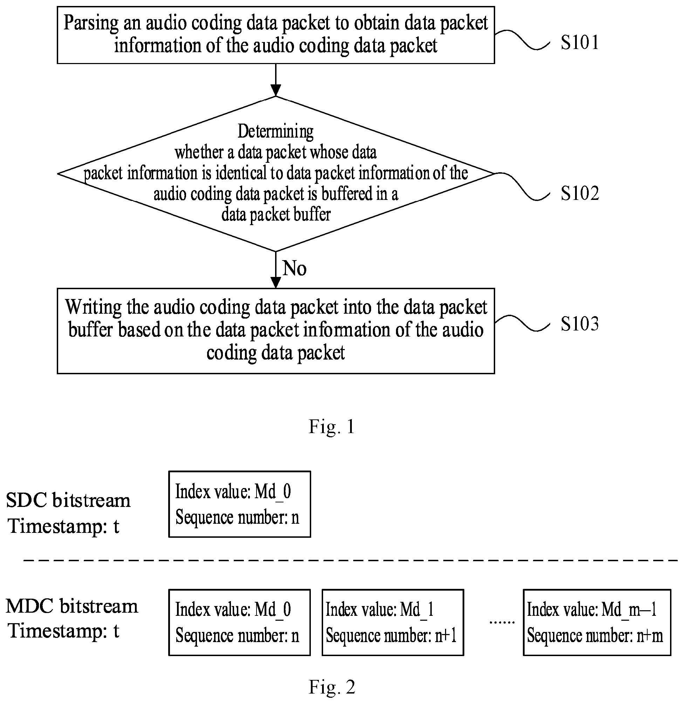

An embodiment of the present disclosure provides a method for processing an audio coding data packet. With reference to Fig. 1, the method for processing an audio coding data packet includes the following steps S101 to S103.

S101: parsing an audio coding data packet to obtain data packet information of the audio coding data packet.

The data packet information includes a timestamp and a description index value of the audio coding data packet. The audio coding data packet is obtained by coding audio data. The audio coding data packet includes at least one description of the audio data. The description index value is an index of the description.

In the embodiments of the present disclosure, the audio data may be coded into at least one bitstream. For example, the audio data may be coded into one bitstream in a single description coding mode, and this one bitstream is referred to as a description. The audio data may be coded into a plurality of bitstreams in a multiple description coding mode, and each of the bitstreams is referred to as a description.

In the embodiments of the present disclosure, the coding mode for audio data includes single description coding (SDC) and multiple description coding (MDC). With reference to Fig. 2, in response to the coding mode for audio data being SDC, an SDC bitstream of audio data with the same timestamp includes only one description (a description with an index value of Md_0); and in response to the coding mode for audio data being MDC, an MDC bitstream of audio data with the same timestamp includes a plurality of descriptions (for example, a description with an index value of Md_0 to a description with an index value of Md_m-1).

In the embodiments of the present disclosure, the physical meaning of the timestamp of the audio coding data packet is a sequence number of the first sample point in the audio coding data packet. For example, if an audio coding data packet carries sample points whose sequence numbers are 0 to 959, the timestamp of the audio coding data packet is the sequence number 0 of the first sample point therein. For another example, if an audio coding data packet carries sample points whose sequence numbers are x to x+y, the timestamp of the audio coding data packet is the sequence number x of the first sample point therein.

In the embodiments of the present disclosure, the description index value is used to distinguish between different description bitstreams in a plurality of description bitstreams. In the embodiments of the present disclosure, the description index value may be denoted as md_i, for example, md_0, md_1, and md_2.

S102: determining whether a data packet whose data packet information is identical to data packet information of the audio coding data packet is buffered in a data packet buffer.

In step S102, in response to determining that no data packet whose data packet information is identical to data packet information of the audio coding data packet is buffered in the data packet buffer, the process proceeds to step S103.

Because the data packet information includes the timestamp and the description index value of the audio coding data packet, the data packet information is considered identical only if both the timestamp and description index value are the same. Therefore, in response to determining that no data packet including the same timestamp and the same description index value as the audio coding data packet is buffered in the data packet buffer, it is determined that no data packet whose data packet information is identical to data packet information of the audio coding data packet is buffered in the data packet buffer.

S103: writing the audio coding data packet into the data packet buffer based on the data packet information of the audio coding data packet.

In the method for processing an audio coding data packet according to the embodiments of the present disclosure, the audio coding data packet is first parsed to obtain data packet information of the audio coding data packet; then whether a data packet whose data packet information is identical to data packet information of the audio coding data packet is buffered in a data packet buffer is determined; and in response to that no data packet whose data packet information is identical to data packet information of the audio coding data packet is buffered in the data packet buffer, the audio coding data packet is written into the data packet buffer based on the data packet information of the audio coding data packet. In the embodiments of the present disclosure, the data packet information includes the timestamp and the description index value of the audio coding data packet, and in response to the timestamp or the description index value of the audio coding data packet being different from that of a buffered data packet, the audio coding data packet is written into the data packet buffer. Therefore, compared with a known technology in which an audio jitter buffer can buffer only one audio coding data packet for audio data with the same timestamp, the embodiments of the present disclosure may buffer all audio coding data packets with different description index values for the same timestamp, to avoid loss of MDC bitstream data.

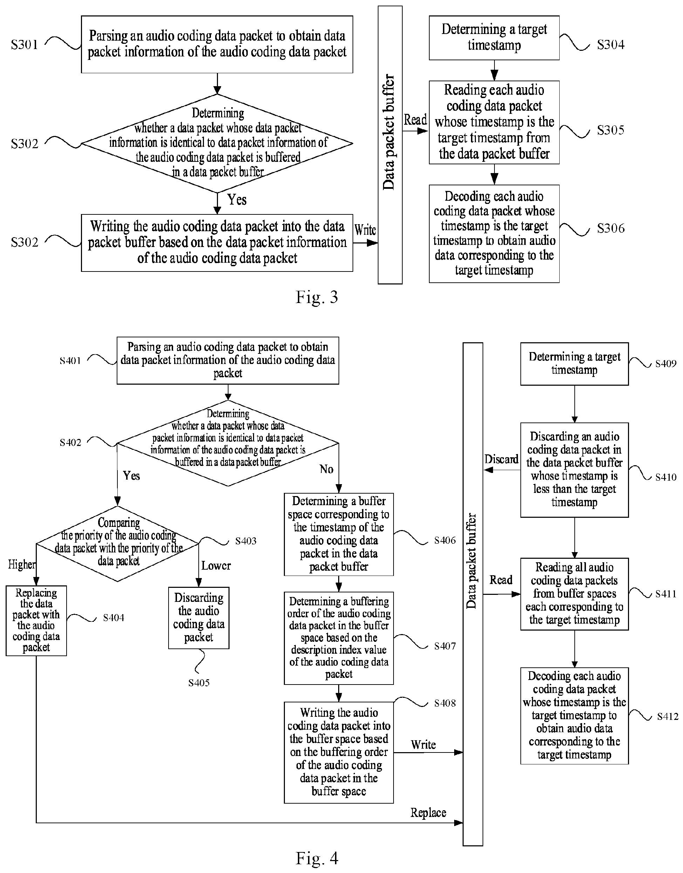

As a refinement and extension of the above embodiment, an embodiment of the present disclosure provides a method for processing an audio coding data packet. With reference to Fig. 3, the method for processing an audio coding data packet includes the following steps.

S301: parsing an audio coding data packet to obtain data packet information of the audio coding data packet.

The data packet information includes a timestamp and a description index value of the audio coding data packet. The audio coding data packet is obtained by coding audio data. The audio coding data packet includes at least one description of the audio data. The description index value is an index of the description.

S302: determining whether a data packet whose data packet information is identical to data packet information of the audio coding data packet is buffered in a data packet buffer.

In step S302, in response to determining that no data packet whose data packet information is identical to data packet information of the audio coding data packet is buffered in the data packet buffer, the process proceeds to step S303.

S303: writing the audio coding data packet into the data packet buffer based on the data packet information of the audio coding data packet.

S304: determining a target timestamp.

The target timestamp is a timestamp of an audio coding data packet that needs to be decoded currently.

S305: reading each audio coding data packet whose timestamp is the target timestamp from the data packet buffer.

S306: decoding each audio coding data packet whose timestamp is the target timestamp to obtain audio data corresponding to the target timestamp.

It should be noted that steps S301 to S303 in the above embodiment are used to implement a process of parsing the audio coding data packet and writing the audio coding data packet into the data packet buffer, and steps S304 to S306 in the above embodiment are used to implement a process of reading the audio coding data packet from the data packet buffer and decoding the audio coding data packet to obtain the audio data. Because the above two processes are performed simultaneously, steps S301 to S303 and steps S304 to S306 are performed simultaneously in this embodiment.

In the method for processing an audio coding data packet according to the embodiments of the present disclosure, the audio coding data packet is first parsed to obtain data packet information of the audio coding data packet; then whether a data packet whose data packet information is identical to data packet information of the audio coding data packet is buffered in a data packet buffer is determined; and in response to that no data packet whose data packet information is identical to data packet information of the audio coding data packet is buffered in the data packet buffer, the audio coding data packet is written into the data packet buffer based on the data packet information of the audio coding data packet. In the embodiments of the present disclosure, the data packet information includes the timestamp and the description index value of the audio coding data packet, and in response to the timestamp or the description index value of the audio coding data packet being different from that of a buffered data packet, the audio coding data packet is written into the data packet buffer. Therefore, compared with a known technology in which an audio jitter buffer can buffer only one audio coding data packet for audio data with the same timestamp, the embodiments of the present disclosure may buffer all audio coding data packets with different description index values for the same timestamp, to avoid loss of MDC bitstream data.

As a refinement and extension of the above embodiment, in response to each description bitstream being transmitted in one audio coding data packet, with reference to Fig. 4, a method for processing an audio coding data packet according to an embodiment of the present disclosure includes the following steps S401 to S412.

S401: parsing an audio coding data packet to obtain data packet information of the audio coding data packet.

The data packet information includes a timestamp and a description index value of the audio coding data packet. The audio coding data packet is obtained by coding audio data. The audio coding data packet includes at least one description of the audio data. The description index value is an index of the description.

In an example shown in Fig. 2, in response to the coding mode for audio data being SDC, an SDC bitstream of audio data with the same timestamp includes only one description; and in response to the coding mode for audio data is MDC, an MDC bitstream of audio data with the same timestamp includes a plurality of descriptions. Therefore, in response to the coding mode for audio data is SDC, only one audio coding data packet is required for transmitting the description of the audio data with the same timestamp; and in response to the coding mode for audio data is MDC, a plurality of audio coding data packets are required for transmitting the descriptions of the audio data with the same timestamp.

S402: determining whether a data packet whose data packet information is identical to data packet information of the audio coding data packet is buffered in a data packet buffer.

In step S402, in response to determining that the data packet whose data packet information is identical to data packet information of the audio coding data packet is buffered in the data packet buffer, the process proceeds to steps S403 to S405.

S403: comparing the priority of the audio coding data packet with the priority of the data packet.

In some embodiments, the priority of the data packet is as follows. The priority of an original media packet is higher than the priority of a retransmitted and recovered packet, the priority of the retransmitted and recovered packet is higher than the priority of a forward error correction (FEC) packet, and the priority of the forward error correction packet is higher than the priority of an in-band FEC packet. That is, the original media packet > the retransmitted and recovered packet > the forward error correction packet > the in-band FEC packet.

The original media packet refers to a data packet of original audio coding data.

The retransmitted and recovered packet refers to a data packet that is obtained through retransmission of the audio coding data packet based on a retransmission mechanism after the original data packet is lost.

The forward error correction (FEC) packet refers to a data packet that is obtained after forward error correction is performed on the audio coding data packet.

The in-band FEC packet refers to a data packet that is obtained after in-band FEC is performed on the audio coding data packet.

In S403, in response to the priority of the audio coding data packet being higher than the priority of the data packet, the process proceeds to the following S404; and in response to the priority of the audio coding data packet being lower than the priority of the data packet, the process proceeds to the following S405.

S404: replacing the data packet with the audio coding data packet.

In some embodiments, the audio coding data packet is the original data packet, and the data packet is the retransmitted and recovered packet. According to the priority order provided in this embodiment, it is easy to determine that the priority of the original data packet is higher than the priority of the retransmitted and recovered packet. Therefore, the data packet is replaced with the audio coding data packet.

S405: discarding the audio coding data packet.

In some embodiments, the audio coding data packet is the in-band FEC packet, and the data packet is the original data packet According to the priority order provided in this embodiment, it is easy to determine that the priority of the in-band FEC packet is lower than the priority of the original data packet. Therefore, the audio coding data packet is discarded.

In step S402, in response to that no data packet whose data packet information is identical to data packet information of the audio coding data packet is buffered in the data packet buffer, the process proceeds to steps S406 to S408.

S406: determining a buffer space corresponding to the timestamp of the audio coding data packet in the data packet buffer.

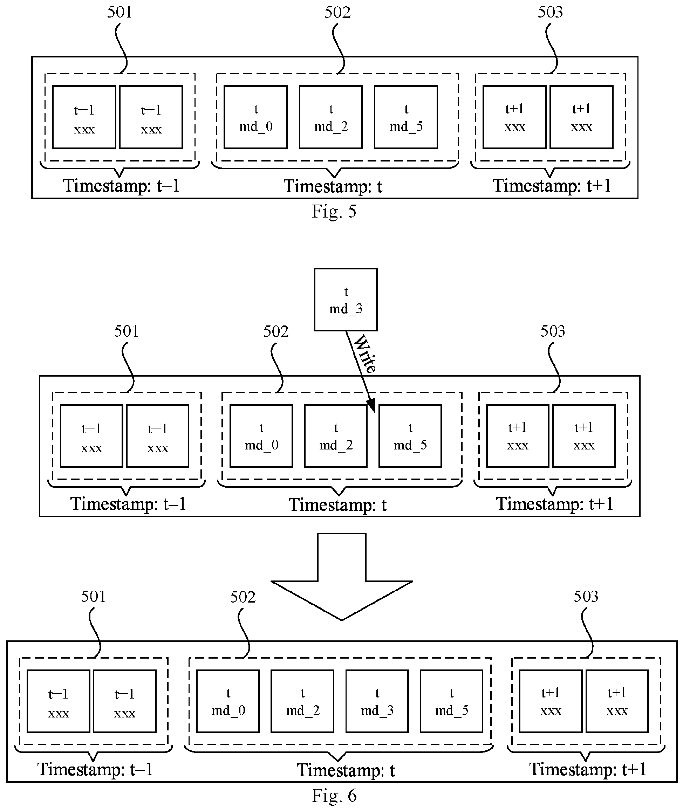

With reference to Fig. 5, the data packet buffer includes a buffer space 501 corresponding to a timestamp t-1, a buffer space 502 corresponding to a timestamp t, and a buffer space 503 corresponding to a timestamp t+1. In response to the timestamp of the audio coding data packet being t-1, the buffer space 501 corresponding to the time t-1 may be determined based on the timestamp being t-1. In response to the timestamp of the audio coding data packet being t, the buffer space 502 corresponding to the timestamp t may be determined according to the timestamp being t. In response to the timestamp of the audio coding data packet being t+1, the buffer space 503 corresponding to the time t+1 may be determined according to the timestamp being t+1.

S407: determining a buffering order of the audio coding data packet in the buffer space based on the description index value of the audio coding data packet.

S408: writing the audio coding data packet into the buffer space based on the buffering order of the audio coding data packet in the buffer space.

With reference to Fig. 6, the data packet buffer includes the buffer space 501 corresponding to the timestamp t-1, the buffer space 502 corresponding to the timestamp t, and the buffer space 503 corresponding to the timestamp t+1; and an audio coding data packet with a description index value of md_0, an audio coding data packet with a description index value of md_2, and an audio coding data packet with a description index value of md_5 are buffered in the buffer space 502 corresponding to the timestamp t. In response to an audio coding data packet with a timestamp of t and a description index value of md_3 being received, the buffer space 502 corresponding to the timestamp t may be first determined based on the timestamp being t, and then it is determined based on the description index value of md_3 that the buffering order of the audio coding data packet in the buffer space is between the audio coding data packet with the description index value of md_2 and the audio coding data packet with the description index value of md_5. Therefore, the audio coding data packet with the timestamp of t and the description index value of md_3 is written between the audio coding data packet with the description index value of md_2 and the audio coding data packet with the description index value of md_5 in the buffer space 502.

S409: determining a target timestamp.

The target timestamp is a timestamp of an audio coding data packet that needs to be decoded currently.

S410: discarding an audio coding data packet in the data packet buffer whose timestamp is less than the target timestamp.

For example, in response to the target timestamp being t, an audio coding data packet with a timestamp t-1, an audio coding data packet with a timestamp t-2, an audio coding data packet with a timestamp t-3, ..., are discarded; and in response to the target timestamp being t+1, an audio coding data packet with a timestamp t, an audio coding data packet with a timestamp t-1, an audio coding data packet with a timestamp t-2, ..., are discarded.

S411: reading all audio coding data packets from buffer spaces each corresponding to the target timestamp.

S412: decoding each audio coding data packet whose timestamp is the target timestamp to obtain audio data corresponding to the target timestamp.

In some embodiments, the data packet information further includes a sequence number of the audio coding data packet and a total number of descriptions of the audio data corresponding to the audio coding data packet. The method for processing an audio coding data packet according to the embodiments of the present disclosure further includes: calculating a packing duration and a delay of the audio coding data packet, and adjusting at least one audio playback parameter corresponding to the audio coding data packet based on the packing duration and the delay. In some embodiments, an implementation of calculating the packing duration and the delay of the audio coding data packet, and adjusting at least one audio playback parameter corresponding to the audio coding data packet based on the packing duration and the delay may include the following step a to step e.

Step a: acquiring a first sequence number based on the sequence number of the audio coding data packet and the description index value of the audio coding data packet.

The first sequence number is a sequence number of the audio coding data packet for transmitting the first description whose timestamp is a first timestamp. The first timestamp is a timestamp of the audio coding data packet.

In response to the coding mode for the audio data corresponding to the audio coding data packet being SDC, the number of descriptions of the audio data corresponding to the audio coding data packet is 1; and in response to the coding mode for the audio data corresponding to the audio coding data packet being MDC, the number of descriptions of the audio data corresponding to the audio coding data packet is greater than or equal to 2.

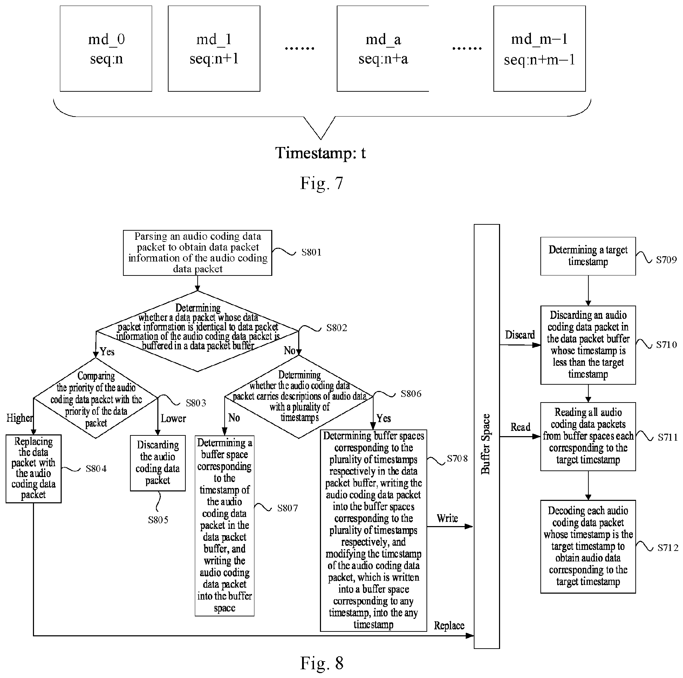

For example, with reference to Fig. 7, an example in which the timestamp of the audio coding data packet is t, the description index value of the audio coding data packet is a, the sequence number of the audio coding data packet is n+a, the coding mode for the audio data corresponding to the audio coding data packet is MDC, and the number of descriptions of the audio data corresponding to the audio coding data packet is x is shown in Fig. 7. Because the descriptions of audio data with the timestamp t are transmitted in one audio coding data packet, in response to an audio coding data packet for transmitting a description with the description index value of a being received, it can be determined that the sequence number for transmitting the first description (a description with a description index value of md_0) of the audio data with the timestamp t is n, and then n may be determined as the first sequence number.

Because sequence numbers of audio coding data packets and description index values of descriptions of audio data are all consecutive, an implementation of acquiring the first sequence number based on the sequence number of the audio coding data packet and the description index value of the audio coding data packet may include: acquiring the first sequence number according to the following formula:

$$s_1 = s_0 - M(i),$$

where $s_0$ is the sequence number of the audio coding data packet, $s_1$ is the first sequence number (the sequence number of an audio coding data packet for transmitting the first description whose timestamp is the first timestamp), and $M(i)$ is the description index value of the audio coding data packet.

Step b: acquiring a second sequence number.

The second sequence number is a sequence number of an audio coding data packet for transmitting the first description whose timestamp is a second timestamp, and the second timestamp is a timestamp of a previously received audio coding data packet.

It should be noted that, in response to the timestamp of the previously received audio coding data packet being identical to the timestamp of the current audio coding data packet, the first sequence number and the second sequence number are sequence numbers of the same audio coding data packet, and the first sequence number is identical to the second sequence number; and in response to the timestamp of the previously received audio coding data packet being different from the timestamp of the current audio coding data packet, the first sequence number and the second sequence number are sequence numbers of different audio coding data packets, and the first sequence number is different from the second sequence number.

Step c: acquiring the packing duration for the audio coding data packet based on the first sequence number, the second sequence number, the first timestamp, the second timestamp, the total number of descriptions, and the sampling rate of the audio data.

In some embodiments, an implementation of step c (acquiring the packing duration for the audio coding data packet based on the first sequence number, the second sequence number, the first timestamp, the second timestamp, the total number of descriptions, and the sampling rate of the audio data) includes: acquiring the packing duration for the audio coding data packet according to the following formulas:

$$n_1 = (ts - ts')/(s_1 - s_2),$$

$$n_2 = m * n_1,$$

$$T = 1000.0f * n_2/fs,$$

where $n_1$ is the total number of sample points in a single audio coding data packet, ts is the first timestamp, ts' is the second timestamp, $s_1$ is the first sequence number, $s_2$ is the second sequence number, $n_2$ is the total number of sample points in all audio coding data packets whose timestamps are the first timestamp, m is the number of descriptions of the audio data corresponding to the audio coding data packet, fs is the sampling rate of the audio data, and T is the packing duration for the audio coding data packet.

Calculation principles of the above formulas are described below.

Because the physical meaning represented by the timestamp of the audio coding data packet is the sequence number of the first sample point in the audio coding data packet, in the above formula $n_1 = (ts - ts')/(s_1 - s_2)$, the total number of sample points of audio data with the first timetamp may be obtained by subtracting the second timestamp ts' from the first timestamp ts; then, the number of audio coding data packets whose timestamps are the first timestamp may be obtained by subtracting the second sequence number from the first sequence number; finally, the number $n_1$ of sample points in a single audio coding data packet whose timestamp is the first timestamp may be obtained by dividing the number of audio coding data packets whose timestamps are the first timestamp by the total number of sample points with the first timestamp.

In the formula $n_2 = m * n_1$, the total number $n_2$ of sample points in all the audio coding data packets whose timestamps are the first timestamp may be obtained by multiplying the number m of descriptions of the audio data corresponding to the audio coding data packet by the number $n_1$ of sample points in a single audio coding data packet.

In the formula T = 1000.0f $* n_2$/fs, a sampling duration for all sample points may be obtained by dividing the sampling rate fs of the audio data by the total number $n_2$ of sample points in all the audio coding data packets whose timestamps are the first timestamp, to obtain the packing duration T of the audio coding data packet.

Step d: acquiring the delay of the audio coding data packet based on the first sequence number, the second sequence number, and the total number of descriptions.

In some embodiments, an implementation of step d (acquiring the delay of the audio coding data packet based on the first sequence number, the second sequence number, and the total number of descriptions) may include the following step: acquiring the delay of the audio coding data packet based on the following formula:

$$ \mathrm{DE} = ((s_1 - s_2)/m) - 1, $$

where DE is the delay of the audio coding data packet, $s_1$ is the first sequence number, $s_2$ is the second sequence number, m is the total number of descriptions of the audio data corresponding to the audio coding data packet.

Step e: adjusting the audio playback parameter corresponding to the audio coding data packet based on the packing duration and the delay.

As an extension and refinement of the above embodiment, in response to descriptions of audio data with the same timestamp being transmitted in the same audio coding data packet, with reference to Fig. 8, a method for processing an audio coding data packet according to an embodiment of the present disclosure includes the following steps.

S801: parsing an audio coding data packet to obtain data packet information of the audio coding data packet.

The data packet information includes a timestamp and a description index value of the audio coding data packet. The audio coding data packet is obtained by coding audio data. The audio coding data packet includes at least one description of the audio data. The description index value is an index of the description.

It should be noted that because the descriptions of the audio data with the same timestamp are transmitted in the same audio coding data packet, the audio coding data packet includes a plurality of description index values in response to the coding mode for audio data being MDC.

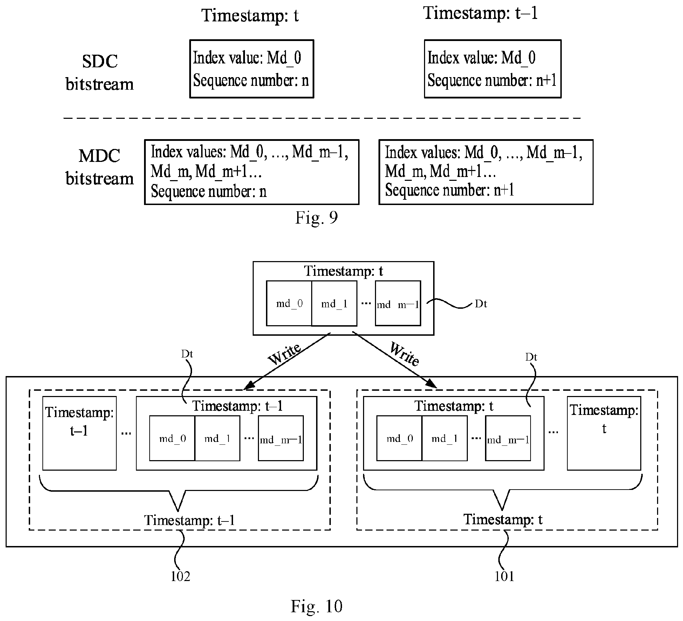

In some embodiments, with reference to Fig. 9, when the descriptions of the audio data with the same timestamp are transmitted in the same audio coding data packet, because the audio data with the same timestamp has only one description, in response to the coding mode for audio data being SDC, an SDC bitstream with the same timestamp includes only one piece of audio coding data packet, and the audio coding data packet includes only one description (a description with an index value of 0) of audio data with the timestamp; and in response to the coding mode for audio data being MDC, and the total number of descriptions of audio data being m, an audio coding data packet of an MDC bitstream with the same timestamp includes m descriptions (descriptions with index values from 0 to m-1) of audio data with the timestamp, and may further include at least one description (a description with an index value of m and a description with an index value of m-1) of audio data with at least one other timestamp.

S802: determining whether a data packet whose data packet information is identical to data packet information of the audio coding data packet is buffered in a data packet buffer.

In S802, in response to that the data packet whose data packet information is identical to data packet information of the audio coding data packet is buffered in the data packet buffer, the process proceeds to S803 to S805.

S803: comparing the priority of the audio coding data packet with the priority of the data packet.

In S803, in response to the priority of the audio coding data packet being higher than the priority of the data packet, the process proceeds to S804; and in response to the priority of the audio coding data packet being lower than the priority of the data packet, the process proceeds to S805.

S804: replacing the data packet with the audio coding data packet.

S805: discarding the audio coding data packet.

In S802, in response to that no data packet whose data packet information is identical to data packet information of the audio coding data packet is buffered in the data packet buffer, the process proceeds to S806 to S808.

S806: determining whether the audio coding data packet carries descriptions of audio data with a plurality of timestamps.

In S806, in response to the audio coding data packet carrying a description of audio data with only one timestamp, the process proceeds to S807; and in response to the audio coding data packet carrying the descriptions of the audio data with a plurality of timestamps, the process proceeds to S808.

S807: determining a buffer space corresponding to the timestamp of the audio coding data packet in the data packet buffer, and writing the audio coding data packet into the buffer space.

S808: determining buffer spaces corresponding to the plurality of timestamps respectively in the data packet buffer, writing the audio coding data packet into the buffer spaces corresponding to the plurality of timestamps respectively, and modifying the timestamp of the audio coding data packet, which is written into a buffer space corresponding to any timestamp, into the any timestamp.

For example, with reference to Fig. 10, an example in which an audio coding data packet with a timestamp t includes a description of audio data with the timestamp t and a description of audio data with a timestamp t-1 is shown in Fig. 10. Because the audio coding data packet with the timestamp t includes the description of the audio data with the timestamp t-1, in response to an audio coding data packet Dt being received, the audio coding data packet Dt is written into a buffer space 101 corresponding to the timestamp t and a buffer space 102 corresponding to the timestamp t-1, and the timestamp of the audio coding data packet Dt written into in the buffer space 102 corresponding to the timestamp t-1 is modified to t-1.

For example, in the example shown in Fig. 10, an implementation of writing, in response to the audio coding data packet with the timestamp t includes the description of the audio data with the timestamp t and the description of the audio data with the timestamp t-1, the audio coding data packet into the buffer space corresponding to the timestamp t and the buffer space corresponding to the timestamp t-1, and modifying the timestamp of the audio coding data packet, which is written into the buffer space corresponding to the timestamp t-1, into t-1 may include the following step 1 to step 4.

Step 1: copying the audio coding data packet to obtain a copied data packet.

Step 2: modifying the timestamp of the copied data packet from t to t-1.

Step 3: writing the modified copied data packet into the buffer space corresponding to the timestamp t-1.

Step 4: writing the original audio coding data packet into the buffer space corresponding to the timestamp t.

S809: determining a target timestamp.

The target timestamp is a timestamp of an audio coding data packet that needs to be decoded currently.

S810: discarding an audio coding data packet in the data packet buffer whose timestamp is less than the target timestamp.

S811: reading all audio coding data packets from buffer spaces each corresponding to the target timestamp.

S812: decoding each audio coding data packet whose timestamp is the target timestamp to obtain audio data corresponding to the target timestamp.

According to the embodiments of the present disclosure, in response to the audio coding data packet carrying the descriptions of the audio data with a plurality of timestamps, the audio coding data packet is written into the buffer space corresponding to each timestamp, and the timestamp of the audio coding data packet written into the buffer space corresponding to any timestamp is modified into the any timestamp. Therefore, the buffer space corresponding to the target timestamp includes all audio coding data packets that carry descriptions of the audio data with the target timestamp, and timestamps of the audio coding data packets are all the target timestamp. Therefore, according to the above embodiment, more information of the audio data with the target timestamp can be obtained through decoding, thereby improving the quality of the obtained audio data with the timestamp.

Based on the same inventive concept, as an implementation of the above method, an embodiment of the present disclosure further provides an apparatus for processing an audio coding data packet. This embodiment corresponds to the above method embodiment. For ease of reading, the details in the above method embodiment are not described again in this embodiment. However, it should be clear that the apparatus for processing an audio coding data packet in this embodiment can implement all the content in the above method embodiment correspondingly.

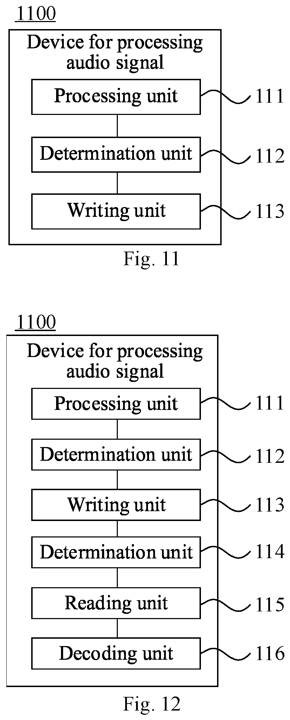

An embodiment of the present disclosure provides an apparatus for processing an audio signal. Fig. 11 is a schematic diagram of a structure of the apparatus for processing an audio coding data packet. With reference to Fig. 11, the apparatus 1100 for processing an audio coding data packet includes:

a processing unit 111 configured to parse an audio coding data packet to obtain data packet information of the audio coding data packet, where the data packet information includes a timestamp and a description index value of the audio coding data packet, the audio coding data packet is obtained by coding audio data, the audio coding data packet includes at least one description of the audio data, and the description index value is an index of the description;
a determination unit 112 configured to determine whether a data packet whose data packet information is identical to data packet information of the audio coding data packet is buffered in a data packet buffer; and
a writing unit 113 configured to, in response to that no data packet whose data packet information is identical to data packet information of the audio coding data packet is buffered in the data packet buffer, write the audio coding data packet into the data packet buffer based on the data packet information of the audio coding data packet.

In an optional implementation of the embodiments of the present disclosure, with reference to Fig. 12, the apparatus 1100 for processing an audio coding data packet further includes:

a determination unit 114 configured to determine a target timestamp, where the target timestamp is a timestamp of an audio coding data packet that needs to be decoded currently;
a reading unit 115 configured to read each audio coding data packet whose timestamp is the target timestamp from the data packet buffer; and
a decoding unit 116 configured to decode each audio coding data packet whose timestamp is the target timestamp to obtain audio data corresponding to the target timestamp.

In an optional implementation of the embodiments of the present disclosure, the writing unit 112 is specifically configured to: in response to each description being transmitted in one audio coding data packet, determine a buffer space corresponding to the timestamp of the audio coding data packet in the data packet buffer; determine a buffering order of the audio coding data packet in the buffer space based on the description index value of the audio coding data packet; and write the audio coding data packet into the buffer space based on the buffering order of the audio coding data packet in the buffer space.

In an optional implementation of the embodiments of the present disclosure, the processing unit 111 is further configured to: acquire a first sequence number based on the sequence number of the audio coding data packet and the description index value of the audio coding data packet, where the first sequence number is a sequence number of an audio coding data packet for transmitting the first description whose timestamp is a first timestamp, and the first timestamp is a timestamp of the audio coding data packet; and acquire a delay of the audio coding data packet based on the first sequence number, a second sequence number, and a total number of descriptions, where the second sequence number is a sequence number of an audio coding data packet for transmitting the first description whose timestamp is a second timestamp, and the second timestamp is a timestamp of a previously received audio coding data packet.

In an optional implementation of the embodiments of the present disclosure, the processing unit 111 is further configured to: acquire a packing duration for the audio coding data packet based on the first sequence number, the second sequence number, the first timestamp, the second timestamp, the total number of descriptions, and a sampling rate of the audio data; acquire a delay of the audio coding data packet based on the first sequence number, a second sequence number, and the total number of descriptions; and adjust an audio playback parameter corresponding to the audio coding data packet based on the packing duration and the delay.

In an optional implementation of the embodiments of the present disclosure, the writing unit 112 is specifically configured to: in response to descriptions of audio data with the same timestamp being transmitted in the same audio coding data packet, determine whether the audio coding data packet carries descriptions of audio data with a plurality of timestamps; and in response to that the audio coding data packet does not carry the descriptions of the audio data with the plurality of timestamps, determine a buffer space corresponding to the timestamp of the audio coding data packet in the data packet buffer, and write the audio coding data packet into the buffer space; or in response to that the audio coding data packet carries the descriptions of the audio data with the plurality of timestamps, determine buffer spaces corresponding to the plurality of timestamps respectively in the data packet buffer, write the audio coding data packet into the buffer spaces corresponding to the plurality of timestamps respectively, and modify the timestamp of the audio coding data packet, which is written into a buffer space corresponding to any timestamp, into the timestamp.

In an optional implementation of the embodiments of the present disclosure, the reading unit 114 is specifically configured to read all audio coding data packets from buffer spaces each corresponding to the target timestamp.

In an optional implementation of the embodiments of the present disclosure, the processing unit 111 is further configured to, after the target timestamp is determined, discard an audio coding data packet in the data packet buffer whose timestamp is less than the target timestamp.

In an optional implementation of the embodiments of the present disclosure, the writing unit 113 is further configured to: in response to determining that the data packet whose data packet information is identical to data packet information of the audio coding data packet is buffered in the data packet buffer, compare a priority of the audio coding data packet with a priority of the data packet; and in response to the priority of the audio coding data packet being higher than the priority of the data packet, replace the data packet with the audio coding data packet; or in response to the priority of the audio coding data packet being lower than the priority of the data packet, discard the audio coding data packet.

The apparatus for processing an audio coding data packet according to this embodiment can perform the method for processing an audio coding data packet according to the above method embodiment. The implementation principles and technical effects thereof are similar, which are not repeated in this embodiment.

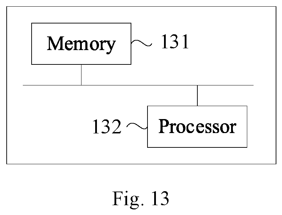

Based on the same inventive concept, an embodiment of the present disclosure further provides an electronic device. Fig. 13 is a schematic diagram of a structure of an electronic device according to an embodiment of the present disclosure. As shown in Fig. 13, the electronic device according to this embodiment includes a memory 131 and a processor 132. The memory 131 is configured to store a computer program. The processor 132 is configured to implement, when executing the computer program, the method for processing an audio coding data packet according to the above embodiment.

Based on the same inventive concept, an embodiment of the present disclosure further provides a computer-readable storage medium having stored thereon a computer program that, when executed by a computing device, causes the computing device to implement the method for processing an audio coding data packet according to the above embodiment.

Based on the same inventive concept, an embodiment of the present disclosure further provides a computer program product that, when run on a computer, causes the computing to implement the method for processing an audio coding data packet according to the above embodiment.

It should be understood by those skilled in the art that the embodiments of the present disclosure may be provided as a method, a system, or a computer program product. Accordingly, the present disclosure may take a form of an entirely hardware embodiment, an entirely software embodiment, or an embodiment combining software and hardware aspects. Furthermore, the present disclosure may take a form of a computer program product implemented on one or more computer-readable storage media that includes computer-readable program codes.

The processor may be a central processing unit (CPU) 103, or may be another general-purpose processor, a digital signal processor (DSP), an application specific integrated circuit (ASIC), a field programmable gate array (FPGA), another programmable logic device, a discrete gate or transistor logic device, a discrete hardware component, etc. The general-purpose processor may be a microprocessor, or the processor may be any conventional processor or the like.

The memory may include a form of a non-permanent memory such as a random access memory (RAM) and/or a non-volatile memory such as a read-only memory (ROM) or a flash memory (flash RAM) in computer-readable media. The memory is an example of the computer-readable medium.

The computer-readable media include permanent and non-permanent, and removable and non-removable storage media. The storage medium may implement storage of information by using any method or technology, and the information may be computer-readable instructions, data structures, program modules, or other data. Examples of the computer storage medium include but are not limited to a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, disk storage or other magnetic storage devices, or any other non-transmission media that may be used to store information accessible by a computing device. As defined herein, the computer-readable medium does not include transitory media, such as modulated data signals and carrier waves.

It should be finally noted that the above embodiments are merely for describing rather than limiting the technical solutions of the present disclosure. Although the present disclosure has been illustrated in detail with reference to the foregoing embodiments, it should be understood by those of ordinary skill in the art that modifications may still be made to the technical solutions described in the foregoing embodiments, or equivalent replacements may be made to all or a part of the technical features; and these modifications or replacements will not cause the essence of corresponding technical solutions to depart from the scope of the technical solutions in the embodiments of the present disclosure.

## Claims

1. A method for processing an audio coding data packet, comprising:

   parsing an audio coding data packet to obtain data packet information of the audio coding data packet, wherein the data packet information comprises a timestamp and a description index value of the audio coding data packet, the audio coding data packet is obtained by coding audio data, the audio coding data packet comprises at least one description of the audio data, and the description index value is an index of the description;
   determining whether a data packet whose data packet information is identical to data packet information of the audio coding data packet is buffered in a data packet buffer; and
   in response to that no data packet whose data packet information is identical to the data packet information of the audio coding data packet is buffered in the data packet buffer, writing the audio coding data packet into the data packet buffer based on the data packet information of the audio coding data packet.

2. The method according to claim **1,** further comprising:

   determining a target timestamp, wherein the target timestamp is a timestamp of an audio coding data packet that needs to be decoded currently;
   reading each audio coding data packet whose timestamp is the target timestamp from the data packet buffer; and

decoding each audio coding data packet whose timestamp is the target timestamp to obtain audio data corresponding to the target timestamp.

3. The method according to claim 2, wherein in response to each description being transmitted in one audio coding data packet, the writing the audio coding data packet into the data packet buffer based on the data packet information of the audio coding data packet comprises:

determining a buffer space corresponding to the timestamp of the audio coding data packet in the data packet buffer;

determining a buffering order of the audio coding data packet in the buffer space based on the description index value of the audio coding data packet; and

writing the audio coding data packet into the buffer space based on the buffering order of the audio coding data packet in the buffer space.

4. The method according to claim 3, wherein the data packet information of the audio coding data packet further comprises a sequence number of the audio coding data packet and a total number of descriptions of the audio data corresponding to the audio coding data packet, and the method further comprises:

acquiring a first sequence number based on the sequence number of the audio coding data packet and the description index value of the audio coding data packet, wherein the first sequence number is a sequence number of an audio coding data packet for transmitting a first description whose timestamp is a first timestamp, and the first timestamp is a timestamp of the audio coding data packet; and

acquiring a delay of the audio coding data packet based on the first sequence number, a second sequence number, and the total number of descriptions, wherein the second sequence number is a sequence number of an audio coding data packet for transmitting a first description whose timestamp is a second timestamp, and the second timestamp is a timestamp of a previously received audio coding data packet.

5. The method according to claim 4, further comprising:

acquiring a packing duration for the audio coding data packet based on the first sequence number, the second sequence number, the first timestamp, the second timestamp, the total number of descriptions, and a sampling rate of the audio data; and

adjusting an audio playback parameter corresponding to the audio coding data packet based on the packing duration and the delay.

6. The method according to claim 2, wherein in response to descriptions of audio data with a same timestamp being transmitted in a same audio coding data packet, the writing the audio coding data packet into the data packet buffer based on the data packet information of the audio coding data packet comprises:

determining whether the audio coding data packet carries descriptions of audio data with a plurality of timestamps; and

in response to that the audio coding data packet does not carry the descriptions of the audio data with the plurality of timestamps, determining a buffer space corresponding to the timestamp of the audio coding data packet in the data packet buffer, and writing the audio coding data packet into the buffer space; or

in response to that the audio coding data packet carries the descriptions of the audio data with the plurality of timestamps, determining buffer spaces corresponding to the plurality of timestamps respectively in the data packet buffer, writing the audio coding data packet into the buffer spaces corresponding to the plurality of timestamps respectively, and modifying the timestamp of the audio coding data packet, which is written into a buffer space corresponding to any timestamp, into the any timestamp.

7. The method according to claim 3 or 6, wherein the reading each audio coding data packet whose timestamp is the target timestamp from the data packet buffer comprises:

reading all audio coding data packets from buffer spaces each corresponding to the target timestamp.

8. The method according to any one of claims 2 to 7, further comprising:

after determining the target timestamp, discarding an audio coding data packet in the data packet buffer whose timestamp is less than the target timestamp.

9. The method according to any one of claims 1 to 8, further comprising:

in response to determining that the data packet whose data packet information is identical to data packet information of the audio coding data packet is buffered in the data packet buffer, comparing a priority of the audio coding data packet with a priority of the data packet; and

in response to the priority of the audio coding data packet being higher than the priority of the data packet, replacing the data packet with the audio coding data packet; or

in response to the priority of the audio coding data packet being lower than the priority of the data packet, discarding the audio coding data packet.

10. An apparatus for processing an audio coding data packet, comprising:

a processing unit, configured to parse an audio coding data packet to obtain data packet information of the audio coding data packet, wherein the data packet information comprises a timestamp and a description index value of the audio coding data packet, the audio coding data packet is obtained by coding audio data, the audio coding data packet comprises at least one description of the audio data, and the description index value is an index of the description;

a determination unit, configured to determine whether a data packet whose data packet information is identical to data packet information of the audio coding data packet is buffered in a data packet buffer; and

a reading unit, configured to, in response to that no data packet whose data packet information is identical to the data packet information of the audio coding data packet is buffered in the data packet buffer, write the audio coding data packet into the data packet buffer based on the data packet information of the audio coding data packet.

11. An electronic device, comprising a memory and a processor, wherein the memory is configured to store a computer program, and the processor is configured to, when executing the computer program, cause the electronic device to implement the method for processing an audio coding data packet according to any one of claims 1 to 9.

12. A computer-readable storage medium, storing a computer program, wherein the computer program, when executed by a computing device, causes the computing device to implement the method for processing an audio coding data packet according to any one of claims 1 to 9.

Parsing an audio coding data packet to obtain data packet information of the audio coding data packet — S101

Determining whether a data packet whose data packet information is identical to data packet information of the audio coding data packet is buffered in a data packet buffer — S102

No

Writing the audio coding data packet into the data packet buffer based on the data packet information of the audio coding data packet — S103

Fig. 1

SDC bitstream
Timestamp: t

| Index value: Md_0 |
| Sequence number: n |

MDC bitstream
Timestamp: t

| Index value: Md_0 | Index value: Md_1 | ...... | Index value: Md_m—1 |
| Sequence number: n | Sequence number: n+1 | | Sequence number: n+m |

Fig. 2

S301 — Parsing an audio coding data packet to obtain data packet information of the audio coding data packet

S302 — Determining whether a data packet whose data packet information is identical to data packet information of the audio coding data packet is buffered in a data packet buffer

Yes

S302 — Writing the audio coding data packet into the data packet buffer based on the data packet information of the audio coding data packet

Write

Data packet buffer

Read

S304 — Determining a target timestamp

S305 — Reading each audio coding data packet whose timestamp is the target timestamp from the data packet buffer

S306 — Decoding each audio coding data packet whose timestamp is the target timestamp to obtain audio data corresponding to the target timestamp

Fig. 3

S401 — Parsing an audio coding data packet to obtain data packet information of the audio coding data packet

S402 — Determining whether a data packet whose data packet information is identical to data packet information of the audio coding data packet is buffered in a data packet buffer

Yes

No

S403 — Comparing the priority of the audio coding data packet with the priority of the data packet

Higher

Lower

S404 — Replacing the data packet with the audio coding data packet

S405 — Discarding the audio coding data packet

S406 — Determining a buffer space corresponding to the timestamp of the audio coding data packet in the data packet buffer

S407 — Determining a buffering order of the audio coding data packet in the buffer space based on the description index value of the audio coding data packet

S408 — Writing the audio coding data packet into the buffer space based on the buffering order of the audio coding data packet in the buffer space

Write

Replace

Data packet buffer

Discard

Read

S409 — Determining a target timestamp

S410 — Discarding an audio coding data packet in the data packet buffer whose timestamp is less than the target timestamp

S411 — Reading all audio coding data packets from buffer spaces each corresponding to the target timestamp

S412 — Decoding each audio coding data packet whose timestamp is the target timestamp to obtain audio data corresponding to the target timestamp

Fig. 4

17

501　　　　　　　　502　　　　　　　　503

| t−1 xxx | t−1 xxx | | t md_0 | t md_2 | t md_5 | | t+1 xxx | t+1 xxx |

Timestamp: t−1　　　Timestamp: t　　　Timestamp: t+1

Fig. 5

t md_3

Write

501　　　　　　　　502　　　　　　　　503

| t−1 xxx | t−1 xxx | | t md_0 | t md_2 | t md_5 | | t+1 xxx | t+1 xxx |

Timestamp: t−1　　　Timestamp: t　　　Timestamp: t+1

501　　　　　　　　502　　　　　　　　503

| t−1 xxx | t−1 xxx | | t md_0 | t md_2 | t md_3 | t md_5 | | t+1 xxx | t+1 xxx |

Timestamp: t−1　　　Timestamp: t　　　Timestamp: t+1

Fig. 6

| md_0 seq:n | md_1 seq:n+1 | ...... | md_a seq:n+a | ...... | md_m−1 seq:n+m−1 |

Timestamp: t

Fig. 7

Parsing an audio coding data packet to obtain data packet information of the audio coding data packet ⟿ S801

Determining whether a data packet whose data packet information is identical to data packet information of the audio coding data packet is buffered in a data packet buffer ⟿ S802

Yes ← → No

Comparing the priority of the audio coding data packet with the priority of the data packet ⟿ S803

Higher | Lower

Replacing the data packet with the audio coding data packet ⟿ S804

Discarding the audio coding data packet ⟿ S805

Determining whether the audio coding data packet carries descriptions of audio data with a plurality of timestamps ⟿ S806

No | Yes

Determining a buffer space corresponding to the timestamp of the audio coding data packet in the data packet buffer, and writing the audio coding data packet into the buffer space ⟿ S807

Determining buffer spaces corresponding to the plurality of timestamps respectively in the data packet buffer, writing the audio coding data packet into the buffer spaces corresponding to the plurality of timestamps respectively, and modifying the timestamp of the audio coding data packet, which is written into a buffer space corresponding to any timestamp, into the any timestamp ⟿ S708

Buffer Space

Discard | Read | Write | Replace

Determining a target timestamp ⟿ S709

Discarding an audio coding data packet in the data packet buffer whose timestamp is less than the target timestamp ⟿ S710

Reading all audio coding data packets from buffer spaces each corresponding to the target timestamp ⟿ S711

Decoding each audio coding data packet whose timestamp is the target timestamp to obtain audio data corresponding to the target timestamp ⟿ S712

Fig. 8

Timestamp: t                          Timestamp: t–1

SDC
bitstream

| Index value: Md_0 | Index value: Md_0 |
| Sequence number: n | Sequence number: n+1 |

MDC
bitstream

| Index values: Md_0, ..., Md_m–1, Md_m, Md_m+1... Sequence number: n | Index values: Md_0, ..., Md_m–1, Md_m, Md_m+1... Sequence number: n+1 |

Fig. 9

Timestamp: t

| md_0 | md_1 | ··· | md_m–1 |

Dt

Write        Write

Dt                                                                    Dt

Timestamp: t–1        ···        Timestamp: t–1

| md_0 | md_1 | ··· | md_m–1 |

Timestamp: t

| md_0 | md_1 | ··· | md_m–1 |        ···        Timestamp: t

Timestamp: t–1

Timestamp: t

102                                                                    101

Fig. 10

1100

Device for processing
audio signal

Processing unit ⟩ 111

Determination unit ⟩ 112

Writing unit ⟩ 113

Fig. 11

1100

Device for processing
audio signal

Processing unit ⟩ 111

Determination unit ⟩ 112

Writing unit ⟩ 113

Determination unit ⟩ 114

Reading unit ⟩ 115

Decoding unit ⟩ 116

Fig. 12

Fig. 13

## INTERNATIONAL SEARCH REPORT

| International application No. |
|---|
| **PCT/CN2023/116052** |

### A. CLASSIFICATION OF SUBJECT MATTER

G10L19/00(2013.01)i

According to International Patent Classification (IPC) or to both national classification and IPC

### B. FIELDS SEARCHED

Minimum documentation searched (classification system followed by classification symbols)

IPC:G10L19

Documentation searched other than minimum documentation to the extent that such documents are included in the fields searched

Electronic data base consulted during the international search (name of data base and, where practicable, search terms used)

CNABS, CNTXT, CNKI: 音频, 编码, 数据包, 解析, 解码, 时间戳, 描述, 索引, 缓存, 写入, 插入, 顺序, 序列, 优先级; VEN, USTXT, EPTXT, ELSEVIER: audio, frequency, coding, data package, parse, decode, timestamp, describe, index, buffer memory, read-in, insert, gradation, list, priority

### C. DOCUMENTS CONSIDERED TO BE RELEVANT

| Category* | Citation of document, with indication, where appropriate, of the relevant passages | Relevant to claim No. |
|---|---|---|
| Y | CN 115065860 A (GUANGZHOU MEILU ELECTRONICS CO., LTD.) 16 September 2022 (2022-09-16) <br> description, paragraphs 88-233, and figures 1-3 | 1-12 |
| Y | CN 111787420 A (SUMAVISION TECHNOLOGIES CO., LTD.) 16 October 2020 (2020-10-16) <br> description, paragraphs 29-97, and figures 1-3 | 1-12 |
| A | CN 111755017 A (G-NET CLOUD SERVICE CO., LTD.) 09 October 2020 (2020-10-09) <br> entire document | 1-12 |
| A | CN 104618786 A (SHENZHEN TENCENT COMPUTER SYSTEMS CO., LTD.) 13 May 2015 (2015-05-13) <br> entire document | 1-12 |
| A | CN 112992161 A (BEIJING CENTURY TAL EDUCATION TECHNOLOGY CO., LTD.) 18 June 2021 (2021-06-18) <br> entire document | 1-12 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2023** | **23 November 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**EP 4 614 496 A1**

## INTERNATIONAL SEARCH REPORT

International application No.

**PCT/CN2023/116052**

### C. DOCUMENTS CONSIDERED TO BE RELEVANT

| Category* | Citation of document, with indication, where appropriate, of the relevant passages | Relevant to claim No. |
|---|---|---|
| A | WO 2019213021 A1 (GOOGLE LLC) 07 November 2019 (2019-11-07) entire document | 1-12 |

Form PCT/ISA/210 (second sheet) (July 2022)

24

**INTERNATIONAL SEARCH REPORT**
Information on patent family members

International application No.

**PCT/CN2023/116052**

| Patent document cited in search report | | | Publication date (day/month/year) | Patent family member(s) | | | Publication date (day/month/year) |
|---|---|---|---|---|---|---|---|
| CN | 115065860 | A | 16 September 2022 | CN | 115065860 | B | 14 March 2023 |
| CN | 111787420 | A | 16 October 2020 | CN | 111787420 | B | 04 November 2022 |
| CN | 111755017 | A | 09 October 2020 | CN | 111755017 | B | 26 January 2021 |
| CN | 104618786 | A | 13 May 2015 | CN | 104618786 | B | 05 January 2018 |
| CN | 112992161 | A | 18 June 2021 | None | | | |
| WO | 2019213021 | A1 | 07 November 2019 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211345610